# EUROPEAN PATENT SPECIFICATION

(11) **EP 3 277 749 B1**
(45) Date of publication and mention of the grant of the patent: **20.12.2023**
(21) Application number: 16716289.0
(22) Date of filing: 30.03.2016
(51) Int. Cl.: C08K 3/30, C08K 5/3492, C08K 5/49, C08K 5/00, C08L 69/00, C08L 83/04

(54) **FLAME RETARDANT COMPOSITION, METHODS OF MANUFACTURE THEREOF AND ARTICLES COMPRISING THE SAME**
FLAMMHEMMENDE ZUSAMMENSETZUNG, VERFAHREN ZUR HERSTELLUNG DAVON UND ARTIKEL DAMIT
COMPOSITION IGNIFUGE, SES PROCÉDÉS DE PRÉPARATION ET ARTICLES LA COMPRENANT

(30) Priority: 31.03.2015 US 201562140591 P
(43) Date of publication of application: 07.02.2018
(73) Proprietor: SHPP Global Technologies B.V., 4612 PX Bergen op Zoom (NL)
(72) Inventor: ZHANG, Yaqin, Shanghai 201319 (CN); GUO, Mingcheng, Shanghai 201319 (CN); ZHENG, Yun, Shanghai 201319 (CN); QIAN, Shengying, Shanghai 201319 (CN)
(74) Representative: Dehns
(86) International application number: PCT/IB2016/051806
(87) International publication number: WO 2016/157098

(56) References cited:
- EP-A1- 0 633 288
- EP-A2- 0 979 840
- JP-A- 2014 080 564
- US-A1- 2014 353 544

## Description

### BACKGROUND

This disclosure relates to a flame retardant composition, methods of manufacture thereof and to articles comprising the same.

Polymers display a number of unique properties that are not commonly displayed by metals or ceramics. Amongst these properties are low density, high toughness and impact resistance, and optical clarity. One of the drawbacks of some polymers is their lack of flame retardancy. Flame retardancy is achieved by the addition of flame retardants to polymers.

Useful flame retardants include halogen containing compounds, nitrogen containing compounds, inorganic hydroxides and phosphorus containing compounds. Halogen containing compounds are generally used in large quantities to impart the desired flame retardancy (which adversely impacts mechanical properties) and release environmentally detrimental halogens into the atmosphere.

The inorganic hydroxides are also used in very large quantities in order to impart the desired flame retardancy and this promotes a reduction in the mechanical properties. Nitrogen and phosphorus containing compounds are free from halogens and are therefore desirable. However both of these compounds have to be added in large amounts, which degrade mechanical properties. It is therefore desirable to find a flame retardant package that are used in conjunction with polymers to produce flame retardant compositions that are flame retardant but that also retain mechanical properties.

EP 0633288 discloses a substantially uniformly blended, flame retardant polypropylene composition and an extruded polypropylene sheet which comprises a polypropylene polymer, the bis(2,3 dibromopropylether) of tetrabromobisphenol A, antimony trioxide, titanium dioxide, calcium sulfate and distearyl pentaerythritol diphosphite.

JP 2014 080564 discloses a carbon fiber-reinforced flame-retardant polycarbonate-based composition which is obtained by blending: 10-100 parts by weight of a polycarbonate resin; 0-90 parts by weight of at least one thermoplastic resin selected from the group consisting of a polyester resin, a styrene resin, an acrylic resin, a polyphenylene ether resin and a polyetherimide resin; 10-300 parts by weight of a carbon fiber based on 100 parts weight of the total of the polycarbonate resin and the thermoplastic resin; and 3-100 parts by weight of a flame retardant containing at least one phosphorus compound (D1) selected from the group consisting of phosphinates, diphosphinates and polymers thereof.

### SUMMARY

Disclosed herein is a composition comprising 20 to 80 wt% of an organic polymer, where the organic polymer is a polycarbonate; 0.1 to 30 wt% of flame retardant that comprises a phosphorus containing flame retardant and/or a nitrogen containing flame retardant; and 0.1 to 50 wt% of calcium sulfate.

Disclosed herein is a method comprising blending 20 to 80 wt% of an organic polymer, where the organic polymer is a polycarbonate; 0.1 to 30 wt% of flame retardant package that comprises a phosphorus flame retardant and/or a nitrogen flame retardant; 0.1 to 50 wt% of calcium sulfate; and molding the composition.

### DETAILED DESCRIPTION

Disclosed herein is a flame retardant composition that displays flame retardancy while retaining mechanical properties such as impact strength and ductility. The flame retardant composition comprises an organic polymer which is a polycarbonate, a phosphorus containing flame retardant and a calcium salt which is calcium sulfate. The calcium salt is a synergist. The flame retardant composition may further optionally comprise a char forming agent, thermally conductive fillers, thermally insulating fillers, an anti-flame dripping agent, or a combination thereof.

The organic polymer is a polycarbonate. "Polycarbonate" as used herein means a polymer or copolymer having repeating structural carbonate units of the formula (1) 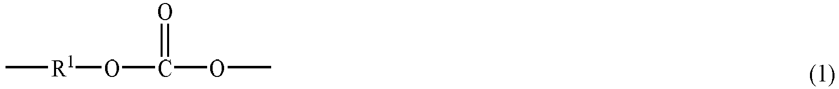 wherein at least 60 percent of the total number of R¹ groups are aromatic, or each R¹ contains at least one C₆₋₃₀ aromatic group. Polycarbonates and their methods of manufacture are known in the art, being described, for example, in WO 2013/175448 A1, US 2014/0295363, and WO 2014/072923. In a specific embodiment, the polycarbonate is a linear homopolymer containing bisphenol A carbonate units (BPA-PC); or a branched, cyanophenol end-capped bisphenol A homopolycarbonate produced via interfacial polymerization, containing 3 mol% 1,1,1-tris(4-hydroxyphenyl)ethane (THPE) branching agent, commercially available under the trade name CFR from the Innovative Plastics division of SABIC.

In another embodiment, the polycarbonate is a poly(carbonate-siloxane) comprising bisphenol A carbonate units and siloxane units, for example blocks containing 5 to 200 dimethylsiloxane units, such as those commercially available under the trade name EXL from the Innovative Plastics division of SABIC.

Other specific polycarbonates that can be used include poly(ester-carbonate)s comprising bisphenol A carbonate units and isophthalate-terephthalate-bisphenol A ester units, also commonly referred to as poly(carbonate-ester)s (PCE) or poly(phthalate-carbonate)s (PPC), depending on the relative ratio of carbonate units and ester units.

Other specific polycarbonates that can be used include poly(ester-carbonate-siloxane)s comprising bisphenol A carbonate units, isophthalate-terephthalate-bisphenol A ester units, and siloxane units, for example blocks containing 5 to 200 dimethylsiloxane units, such as those commercially available under the trade name FST from the Innovative Plastics division of SABIC.

Poly(aliphatic ester-carbonate)s can be used, such as those comprising bisphenol A carbonate units and sebacic acid-bisphenol A ester units, such as those commercially available under the trade name LEXAN HFD from the Innovative Plastics division of SABIC. Another specific copolycarbonate includes bisphenol A and bulky bisphenol carbonate units, i.e., derived from bisphenols containing at least 12 carbon atoms, for example 12 to 60 carbon atoms or 20 to 40 carbon atoms. Examples of such copolycarbonates include copolycarbonates comprising bisphenol A carbonate units and 2-phenyl-3,3'-bis(4-hydroxyphenyl) phthalimidine carbonate units (a BPA-PPPBP copolymer, commercially available under the trade designation XHT from the Innovative Plastics division of SABIC), a copolymer comprising bisphenol A carbonate units and 1,1-bis(4-hydroxy-3-methylphenyl)cyclohexane carbonate units (a BPA-DMBPC copolymer commercially available under the trade designation DMC from the Innovative Plastics division of SABIC), and a copolymer comprising bisphenol A carbonate units and isophorone bisphenol carbonate units (available, for example, under the trade name APEC from Bayer).

As noted above, the polycarbonate may include a linear polycarbonate, a branched polycarbonate, or a mixture of a linear and a branched polycarbonate. When the polycarbonate includes a mixture of a linear and a branched polycarbonate, the branched polycarbonate is used in amounts of 5 to 20 wt%, specifically 6 to 16 wt% and more specifically 7 to 12 wt%, based on the total weight of the flame retardant composition. Linear polycarbonates are used in amounts of 15 to 65 wt%, specifically 20 to 60 wt%, and more specifically 25 to 55 wt%, based on the total weight of the flame retardant composition.

The polycarbonate is used in amounts of 20 to 80, specifically 25 to 75, specifically 30 to 70, specifically 40 to 65, specifically 45 to 60 wt%, based on the total weight of the composition.

The flame retardant composition may further comprise a polysiloxane-polycarbonate copolymer, also referred to as a polysiloxane-polycarbonate. The polydiorganosiloxane (also referred to herein as "polysiloxane") blocks of the copolymer comprise repeating diorganosiloxane units as in formula (2) 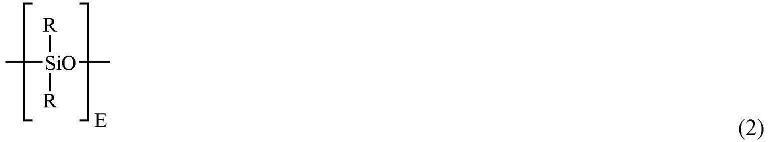 wherein each R is independently a C₁₋₁₃ monovalent organic group. For example, R can be a C₁-C₁₃ alkyl, C₁-C₁₃ alkoxy, C₂-C₁₃ alkenyl group, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. Combinations of the foregoing R groups can be used in the same copolymer.

The value of E in formula (2) can vary widely depending on the type and relative amount of each component in the flame retardant composition, the desired properties of the composition, and like considerations. Generally, E has an average value of 2 to 1,000, specifically 3 to 500, more specifically 5 to 100. In an embodiment, E has an average value of 10 to 75, and in still another embodiment, E has an average value of 40 to 60. Where E is of a lower value, e.g., less than 40, it can be desirable to use a relatively larger amount of the polycarbonate-polysiloxane copolymer. Conversely, where E is of a higher value, e.g., greater than 40, a relatively lower amount of the polycarbonate-polysiloxane copolymer can be used.

A combination of a first and a second (or more) polycarbonate-polysiloxane copolymers can be used, wherein the average value of E of the first copolymer is less than the average value of E of the second copolymer.

In an embodiment, the polysiloxane blocks are of formula (3) 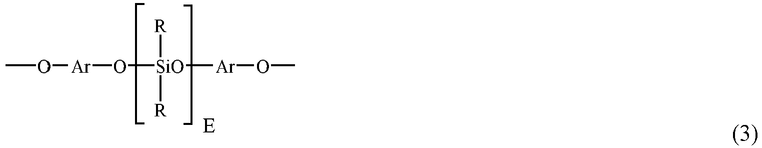 wherein E is as defined above; each R can be the same or different, and is as defined above; and Ar can be the same or different, and is a substituted or unsubstituted C₆-C₃₀ arylene group, wherein the bonds are directly connected to an aromatic moiety. Ar groups in formula (3) can be derived from a C₆-C₃₀ dihydroxyarylene compound, for example a dihydroxyarylene compound of formula (3), (4) or (6) above. Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another embodiment, polysiloxane blocks are of formula (4) 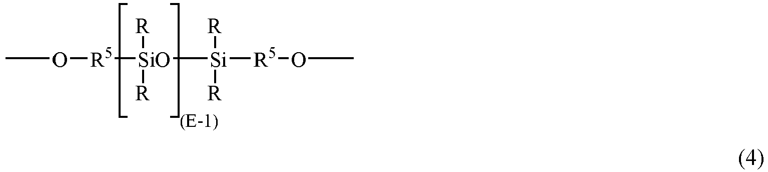 wherein R and E are as described above, and each R⁵ is independently a divalent C₁-C₃₀ organic group, and wherein the polymerized polysiloxane unit is the reaction residue of its corresponding dihydroxy compound. In a specific embodiment, the polysiloxane blocks are of formula (5): 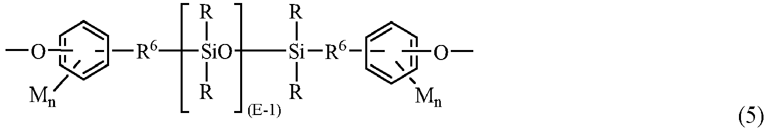 wherein R and E are as defined above. R⁶ in formula (19) is a divalent C₂-C₈ aliphatic group. Each M in formula (5) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In an embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is one, R² is a divalent C₁-C₃ aliphatic group, and R is methyl.

Blocks of formula (6) can be derived from the corresponding dihydroxy polysiloxane (20) 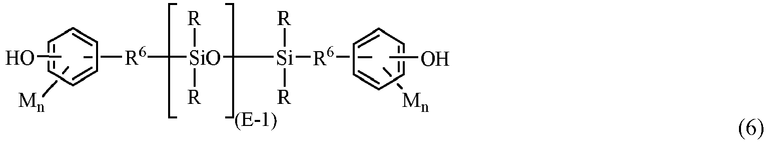 wherein R, E, M, R⁶, and n are as described above. Such dihydroxy polysiloxanes can be made by effecting a platinum-catalyzed addition between a siloxane hydride of formula (7) 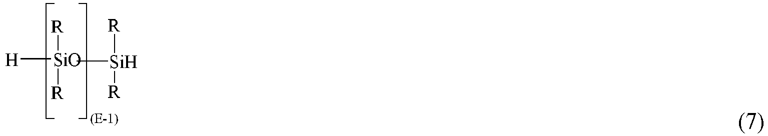 wherein R and E are as previously defined, and an aliphatically unsaturated monohydric phenol. Exemplary aliphatically unsaturated monohydric phenols include eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Combinations comprising at least one of the foregoing can also be used.

The polysiloxane-polycarbonate copolymer can comprise 50 to 99 weight percent of carbonate units and 1 to 50 weight percent siloxane units. Within this range, the polyorganosiloxane-polycarbonate copolymer can comprise 70 to 98 weight percent, more specifically 75 to 97 weight percent of carbonate units and 2 to 30 weight percent, more specifically 3 to 25 weight percent siloxane units. In an exemplary embodiment, the polysiloxane-polycarbonate copolymer is endcapped with para-cumyl phenol.

In an embodiment, an exemplary polysiloxane-polycarbonate copolymer is a block copolymer having the structure shown in the Formula (8) below: 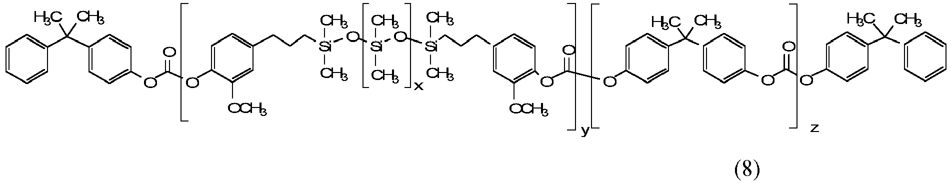 where the polysiloxane blocks are endcapped with eugenol, where x is 1 to 100, specifically 5 to 85, specifically 10 to 70, specifically 15 to 65, and more specifically 40 to 60. In an embodiment, y is 1 to 90 and z is 1 to 600. The polysiloxane block may be randomly distributed or controlled distributed amongst the polycarbonate blocks. In an embodiment, x is 30 to 50, y is 10 to 30, and z is 450 to 600.

When the polysiloxane polycarbonate copolymer comprises eugenol endcapped polysiloxane, the flame retardant composition comprises 0 to 25 wt% of the polysiloxane-polycarbonate copolymer. The polysiloxane content is 0 to 20 wt%, specifically 1 to 16 wt%, specifically 2 to 14 wt%, and more specifically 4 to 12 wt%, based on the total weight of the polysiloxane-polycarbonate copolymer. In an embodiment, the weight average molecular weight of the polysiloxane block is 29,000 to 30,000 Daltons using gel permeation chromatography with a bisphenol A polycarbonate absolute molecular weight standard.

In an embodiment, the polysiloxane-polycarbonate copolymer comprises 10 wt% or less, specifically 6 wt% or less, and more specifically 4 wt% or less, of the polysiloxane based on the total weight of the polysiloxane-polycarbonate copolymer. Polysiloxane-polycarbonate copolymers containing 10 wt% or less are generally optically transparent and are sometimes referred to as EXL-T as commercially available from Sabic.

In another embodiment, the polysiloxane-polycarbonate copolymer comprises 10 wt% or more, specifically 12 wt% or more, and more specifically 14 wt% or more, of the polysiloxane based on the total weight of the polysiloxane-polycarbonate copolymer. Polysiloxane-polycarbonate copolymers containing 10 wt% or more polysiloxane are generally optically opaque and are sometimes referred to as EXL-P as commercially available from Sabic.

The polysiloxane polycarbonate copolymer can have a weight average molecular weight of 2,000 to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polysiloxane polycarbonate copolymer can have a melt volume flow rate, measured at 300°C/1.2 kg, of 1 to 50 cubic centimeters per 10 minutes (cc/10 min), specifically 2 to 30 cc/10 min. Mixtures of polysiloxane polycarbonate copolymer of different flow properties can be used to achieve the overall desired flow property.

The polysiloxane polycarbonate copolymer is present in the flame retardant composition in an amount of 3 to 30 wt%, specifically 6 to 20 wt%, and more specifically 7 to 13 wt%, based on the total weight of the flame retardant composition.

The phosphorous and/or nitrogen containing flame retardant comprises phosphine, phosphinite, phosphonite, phosphite, phosphine oxide, phosphinate, phosphonate, phosphate, such as bisphenol A bis(diphenyl phosphate) (BPADP), phenoxyphosphazene, resorcinol diphosphate (RDP), triphenylphosphate (TPP), melamine polyphosphate, melamine cyanurate, or a combination thereof.

The phosphorus-containing group can be a phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the foregoing phosphorus-containing groups can be the same or different, provided that at least one R is an aromatic group. A combination of different phosphorus-containing groups can be used. The aromatic group can be directly or indirectly bonded to the phosphorus, or to oxygen of the phosphorus-containing group (i.e., an ester).

In an embodiment the aromatic organophosphorus compound is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups can be joined together to provide a cyclic group. In some embodiments G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopi-opylated triphenyl phosphate, and the like.

Di- or polyfunctional aromatic phosphorus-containing compounds are also useful, for example, compounds of formula (9) 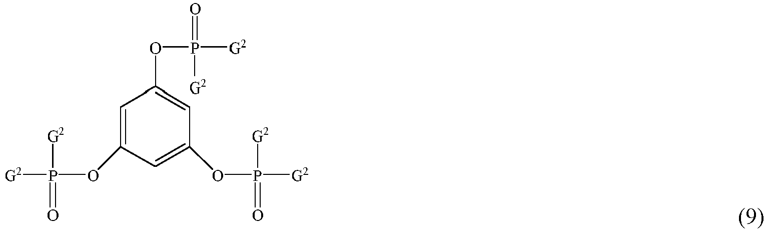 wherein each G² is independently a hydrocarbon or hydrocarbonoxy having 1 to 30 carbon atoms. In some embodiments G corresponds to a monomer used to form the polycarbonate, e.g., resorcinol.

Specific aromatic organophosphorus compounds have two or more phosphorus-containing groups, and are inclusive of acid esters of formula (10): 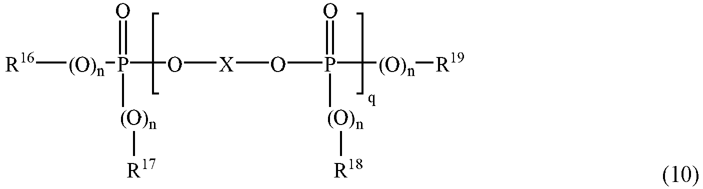 wherein R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X is a mono- or poly-nuclear aromatic C₆₋₃₀ moiety or a linear or branched C₂₋₃₀ aliphatic radical, which can be OH-substitated and can contain up to 8 ether bonds, provided that at least one of R¹⁶, R¹⁷, R¹⁸, R¹⁹, and X is an aromatic group. In some embodiments R¹⁶, R¹⁷, R¹⁸, and R¹⁹ are each independently C₁₋₄ alkyl, naphthyl, phenyl(C₁₋₄)alkylene, or aryl groups optionally substituted by C₁₋₄ alkyl. Specific aryl moieties are cresyl, phenyl, xylenyl, propylphenyl, or butylphenyl. In some embodiments X in formula (10) is a mono- or poly-nuclear aromatic C₆₋₃₀ moiety derived from a diphenol. Further in formula (10), n is each independently 0 or 1; in some embodiments n is equal to 1. Also in formula (10), q is from 0.5 to 30, from 0.8 to 15, from I to 5, or from 1 to 2. Specifically, X can be represented by the following divalent groups (11), or a combination comprising one or more of these divalent groups, 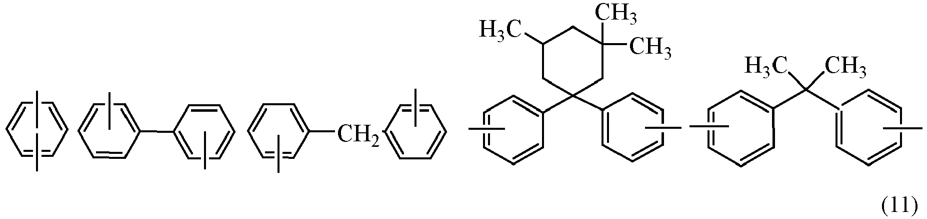 wherein the monophenylene and bisphenol-A groups can be specifically mentioned.

In these embodiments, each of R¹⁶, R¹⁷, R¹⁸, and R¹⁹ can be aromatic, i.e., phenol, n is 1, and p is 1-5, specifically 1-2. In some embodiments at least one of R¹⁶, R¹⁷, R¹⁸, R¹⁹, and X corresponds to a monomer used to form the polycarbonate, e.g., bisphenol-A or resorcinol. In another embodiment, X is derived especially from resorcinol, hydroquinone, bisphenol-A, or diphenylphenol, and R¹⁶, R¹⁷, R¹⁸, R¹⁹, is aromatic, specifically phenyl. A specific aromatic organo phosphorus compound of this type is resorcinol bis(diphenyl phosphate), also known as RDP. Another specific class of aromatic organophosphorus compounds having two or more phosphorus-containing groups are compounds of formula (12) 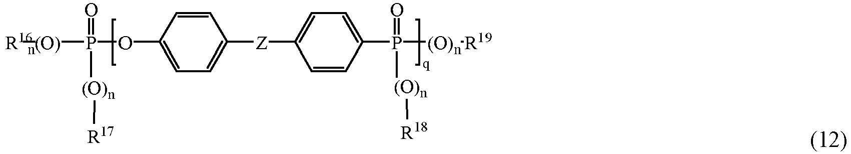 wherein R¹⁶, R¹⁷, R¹⁸, R¹⁹, n, and q are as defined for formula (12) and wherein Z is C₁₋₇ alkylidene, C₁₋₇ alkylene, C₅₋₁₂ cycloalkylidene, -O-, -S-, -SO₂-, or -CO-, specifically isopropylidene. A specific aromatic organophosphorus compound of this type is bisphenol-A bis(diphenyl phosphate), also known as BPADP, wherein R¹⁶, R¹⁷, R¹⁸, and R¹⁹ are each phenyl, each n is 1, and q is from 1 to 5, from 1 to 2, or 1.

The phosphazene compound used in the flame retardant composition is an organic compound having a -P=N- bond in the molecule. In an embodiment, the phosphazene compound comprises at least one species of the compound selected from the group consisting of a cyclic phenoxyphosphazene represented by the formula (13) below; a chainlike phenoxyphosphazene represented by the formula (14) below; and a crosslinked phenoxyphosphazene compound obtained by crosslinking at least one species of phenoxyphosphazene selected from those represented by the formulae (13) and (14) below, with a crosslinking group represented by the formula (15) below: 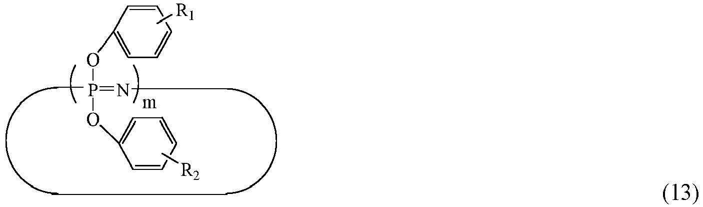 where in the formula (13), m represents an integer of 3 to 25, R₁ and R₂ are the same or different and are independently a hydrogen, a hydroxyl, a C₇₋₃₀ aryl group, a C₁₋₁₂ alkoxy, or a C₁₋₁₂ alkyl.

The chainlike phenoxyphosphazene represented by the formula (14) below: 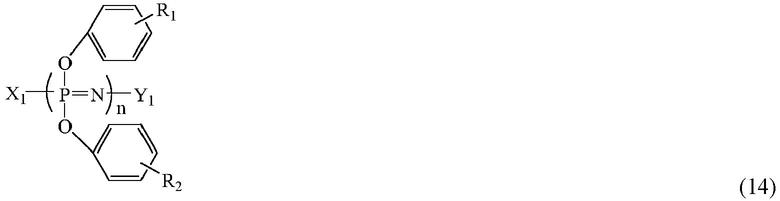 where in the formula (14), X¹ represents a -N=P(OPh)₃ group or a -N=P(O)OPh group, Y¹ represents a -P(OPh)₄ group or a -P(O) (OPh)₂ group, n represents an integer from 3 to 10000, Ph represents a phenyl group, R₁ and R₂ are the same or different and are independently a hydrogen, a halogen, a C₁₋₁₂ alkoxy, or a C₁₋₁₂ alkyl.

The phenoxyphosphazenes may also have a crosslinking group represented by the formula (15) below: 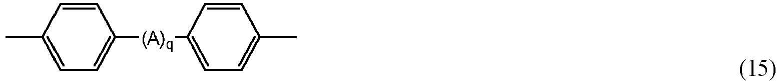 where in the formula (15), A represents -C(CH3)₂-, -SO₂-, -S-, or -O-, and q is 0 or 1.

In an embodiment, the phenoxyphosphazene compound has a structure represented by the formula (16) 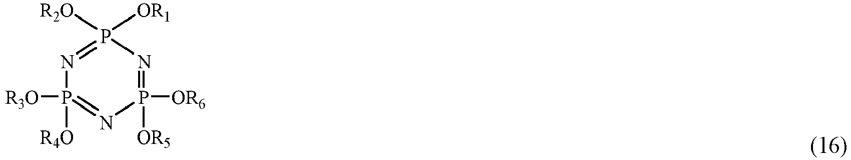 where R₁ to R₆ can be the same of different and can be an aryl group, an aralkyl group, a C₁₋₁₂ alkoxy, a C₁₋₁₂ alkyl, or a combination thereof.

In an embodiment, the phenoxyphosphazene compound has a structure represented by the formula (17)

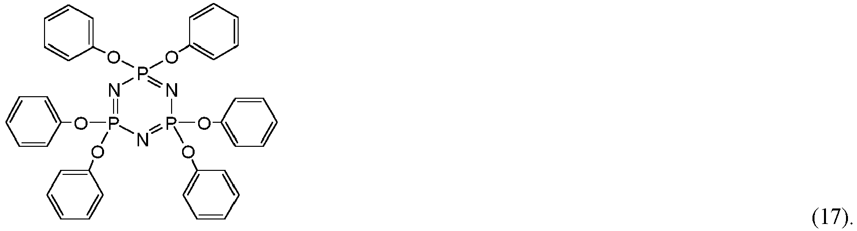

Commercially available phenoxyphosphazenes are FP-110^{®} manufactured and distributed by Fushimi Pharmaceutical Co., Ltd., LY202^{®} manufactured and distributed by Lanyin Chemical Co., Ltd., and SPB-100^{®} manufactured and distributed by Otsuka Chemical Co., Ltd.

The cyclic phenoxyphosphazene compound represented by the formula (13) may be exemplified by compounds such as phenoxy cyclotriphosphazene, octaphenoxy cyclotetraphosphazene, and decaphenoxy cyclopentaphosphazene, obtained by allowing ammonium chloride and phosphorus pentachloride to react at 120 to 130°C to obtain a mixture containing cyclic and straight chain chlorophosphazenes, extracting cyclic chlorophosphazenes such as hexachloro cyclotriphosphazene, octachloro cyclotetraphosphazene, and decachloro cyclopentaphosphazene, and then substituting it with a phenoxy group. The cyclic phenoxyphosphazene compound may be a compound in which m in the formula (13) represents an integer of 3 to 8.

The chainlike phenoxyphosphazene compound represented by the formula (14) is exemplified by a compound obtained by subjecting hexachloro cyclotriphosphazene, obtained by the above-described method, to ring-opening polymerization at 220 to 250°C, and then substituting thus obtained chainlike dichlorophosphazene having a degree of polymerization of 3 to 10000 with phenoxy groups. The chain-like phenoxyphosphazene compound has a value of n in the formula (14) of 3 to 1000, specifically 5 to 100, and more specifically 6 to 25.

The crosslinked phenoxyphosphazene compound may be exemplified by compounds having a crosslinked structure of a 4,4'-diphenylene group, such as a compound having a crosslinked structure of a 4,4'-sulfonyldiphenylene (bisphenol S residue), a compound having a crosslinked structure of a 2,2-(4,4'-diphenylene) isopropylidene group, a compound having a crosslinked structure of a 4,4'-oxydiphenylene group, and a compound having a crosslinked structure of a 4,4'-thiodiphenylene group. The phenylene group content of the crosslinked phenoxyphosphazene compound is generally 50 to 99.9 wt%, and specifically 70 to 90 wt%, based on the total number of phenyl group and phenylene group contained in the cyclic phosphazene compound represented by the formula (13) and/or the chainlike phenoxyphosphazene compound represented by the formula (14). The crosslinked phenoxyphosphazene compound may be particularly preferable if it doesn't have any free hydroxyl groups in the molecule thereof. In an exemplary embodiment, the phosphazene compound comprises the cyclic phosphazene.

The flame-retardant composition may also comprise (a) a condensed triazine derivative and (b) a reaction product of a triazine derivative with cyanuric acid. Condensed triazine derivatives used in the flame-retardant polyamide composition can have a structure corresponding to the formula (18) 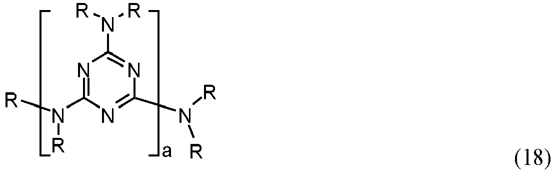 or a structure corresponding to the formula (19) 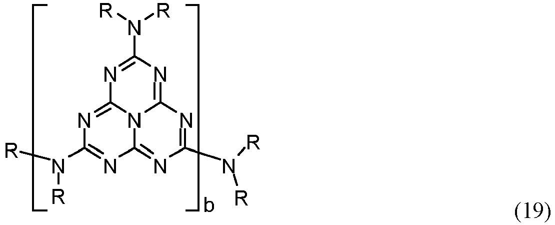 wherein R is independently hydrogen, a C₁-C₈ alkyl, C₃-C₁₆ cycloalkyl, or a C₆-C₁₂ aryl; and a and b are integers between 1 and 500.

In one exemplary embodiment, the condensed triazine derivative is melamine, wherein in the formula (I) above, R is hydrogen, and a = 1. In another advantageous embodiment, the condensed triazine derivative is melam, wherein in the formula (18) above, R is hydrogen, and a = 2. The structure for melam is shown in the formula (20) below:

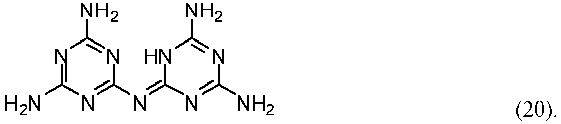

In another exemplary embodiment, the condensed triazine derivative is melem, wherein according to formula (19) above, R is hydrogen and b = 1. The structure for melem is shown in the formula (22) below:

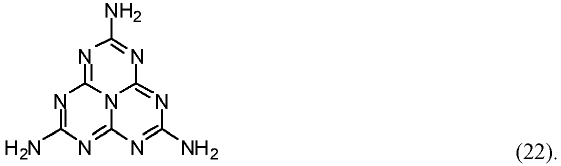

In yet another exemplary embodiment, the condensed triazine derivative is melon, wherein according to formula (19), R is hydrogen, and b is greater than or equal to 2. The structure for melon is shown in the formula (23) below:

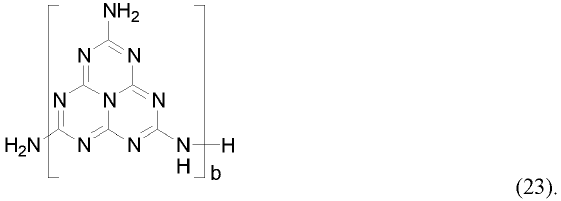

In one embodiment, the condensed triazine derivative can be melon, melam, melem, or a combination thereof.

In one embodiment, the condensed triazine derivative is present in the flame retardant composition in an amount of about 1 to about 30 wt%, specifically about 2 to about 20, and more specifically about 5 to about 15 wt%, based upon the weight of the flame retardant composition.

As noted above, the flame retardant composition also comprises a reaction product of a triazine derivative with cyanuric acid as shown in the formula (24) or (25) below: 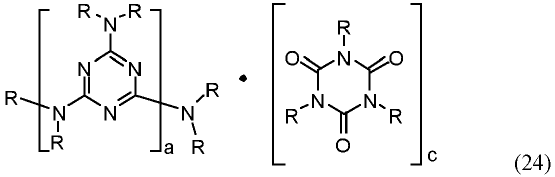 or 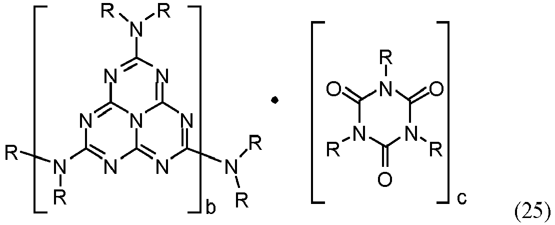 wherein R, a, and b are as defined above, and c is independently an integer between 1 and 500. In one embodiment, the reaction product of a triazine derivative with cyanuric acid can comprise a combination comprising at least one of the foregoing compounds shown in the structures (24) and (25).

One exemplary reaction product of a triazine derivative with cyanuric acid is melamine cyanurate wherein in the formula (24), R is hydrogen and a and c are each equal to 1. The structure for melamine cyanurate is shown in the formula (26) below:

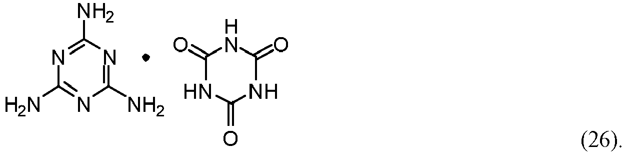

In one embodiment, the reaction product of a triazine derivative with cyanuric acid is present in flame-retardant polyamide composition in an amount of about 5 to about 15, specifically about 6 to about 14, and more specifically about 7 to about 12 weight percent of the total weight of the flame-retardant polyamide composition.

In an exemplary embodiment, it is desirable for the ratio of the weight of condensed triazine derivative to the weight of the reaction product of a triazine derivative with cyanuric acid to be greater than or equal to about 1, specifically greater than or equal to about 1.5, more specifically greater than or equal to about 2, more specifically greater than or equal to about 2.5, and even more specifically greater than or equal to about 3.

The compounds based on reaction products of triazine derivatives with boric, phosphoric, or polyphosphoric acid have general structures shown in the formula (27) or formula (28) below: 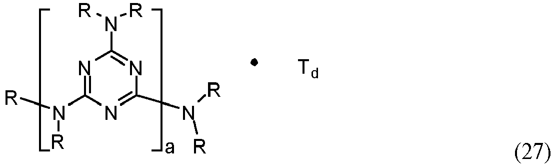 or 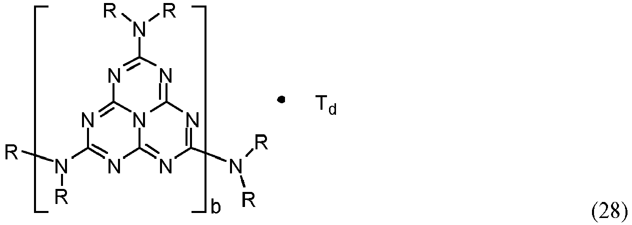 wherein R, a, and b are as defined above, d is an integer between 1 and 500, and T_{d} is boric acid, or a phosphoric acid according to formula (29) 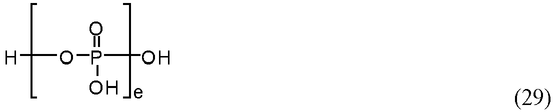 wherein e is an integer between 1 and 500.

The compounds based on reaction products of triazine derivatives with boric, phosphoric, or polyphosphoric acid are present in the flame-retardant composition in an amount of about 1 to about 30 wt%, specifically about 2 to about 20 wt%, specifically about 3 to about 10 wt%, and more specifically 4 to 6 wt%, based on the total weight of the flame-retardant polyamide composition.

Examples of compounds based on reaction products of triazine derivatives with boric, phosphoric, or polyphosphoric acid are melamine polyphosphate, which can be obtained from Ciba Specialty Chemicals under the trade name MELAPUR^{®}200, and melamine phosphate, which can also be obtained from Ciba Specialty Chemicals under the trade name MELAPUR^{®}MP.

An example of melamine phosphate is shown in the formula (30) below: 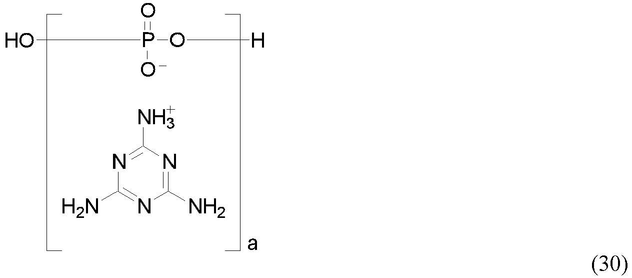 where a has a value between 1 and 500.

In another embodiment, the flame retardant may comprise phosphinate salts. As used herein, phosphinates comprising a phosphinate of the formula (31) and and/or a diphosphinate of the formula (32) 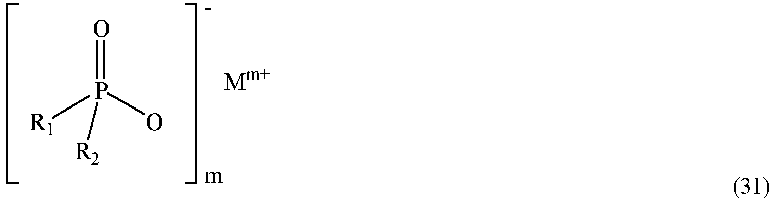 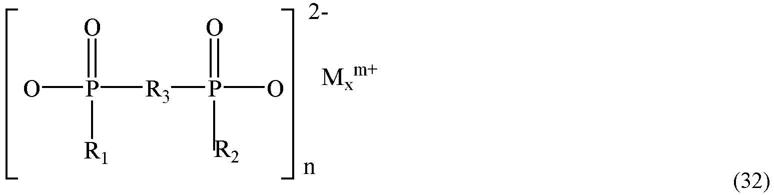 wherein Ri and R₂ are identical or different and are independently C1-C6 alkyl, linear, or branched, and/or aryl; R₃ is Cl-ClO-alkylene, linear, or branched, C6-C10-arylene, - alkylarylene or -arylalkylene; M can be calcium ions, magnesium ions, aluminum ions and/or zinc ions; m can be 2 to 3; n can be 1 or 3; and x can be 1 or 2; and optionally comprising, R₁ and R₂ can be identical or different and are preferably methyl, ethyl, n-propyl, isopropyl, n- butyl, tert-butyl, n-pentyl and/or phenyl. In one embodiment, R₃ can be methylene, ethylene, n-propylene, isopropylene, n-butylene, tert-butylene, n-pentylene, n-octylene, n-dodecylene, or phenylene or naphthylene, or methylphenylene, ethylphenylene, tert-butylphenylene, methylnaphthylene, ethylnaphthylene or tert-butylnaphthylene, or phenylmethylene, phenylethylene, phenylpropylene or phenylbutylene. For example, M can be aluminum ions or zinc ions.

It is desirable for the flame retardant composition to comprise the flame retardant in an amount of 1 to 20 wt%, specifically 2 to 10 wt%, specifically 2.5 wt% to 8 wt%, specifically 3 to 7 wt%, and more specifically 4 to 6.5 wt%, based on the total weight of the flame retardant composition. All numbers are interchangeable.

The calcium salt is calcium sulfate. The calcium sulfate can be a powder, whisker, fiber, or any other shape. The calcium sulfate may contain crystal water or not. The calcium sulfate can comprise hydrated crystals, dehydrated crystals, or a combination of hydrated and dehydrated crystals. The calcium sulfate can be a mixture of CaSO₄, CaSO₄.0.5H₂O, CaSO₄.2H₂O. The number of bonded crystal water molecules with calcium sulfate molecules varies from zero to two, resulting in the different lattice structures, such as monoclinic or orthorhombic.

The particle size would be from 0.01 to 1000, specifically 0.1 to 100 and more specifically 1 to 50 micrometers. The surface of the calcium sulfate may be coated with an adhesion promotor or not. The calcium sulfate is used in amounts of 0.1 to 50 wt%, specifically 1 to 15 wt%, specifically 2 to 10 wt%, and more specifically 3 to 8 wt%, based on the total weight of the composition.

The char-forming agents are optional and include silicone additives such as an organopolysiloxane. An exemplary organopolysiloxane is polydimethylsiloxane (PDMS). The char forming agents also could be silicones with certain functional group, such as phenyl, hydroxyl, amino, epoxy. The char forming agents may be silanes with certain functional group, such as phenyl, hydroxyl, amino, epoxy. The char forming agents may be any branched chain structured or their masterbatch in any polymer base resin or any mixture of any of the foregoing.

The char-forming agents could be polymeric include but are not limited to polyphenylene Sulfide (PPS), polyphenylene ether (PPE) or polyphenylene oxide (PPO), polyetherimide (PEI), polyetheretherketone (PEEK), poly ether sulfone (PES) or any mixture of any of the foregoing. The char forming agent is used in amounts of 0 to 5, specifically 1 to 4, specifically 2 to 3 wt%, based on the total weight of the flame retardant composition.

The composition may optionally contain anti-flame dripping agents include but are not limited to polymeric chain extenders that could be any multi-functional modified styrene-acrylic oligomers; or multi-functional amino or carboxyl chain extenders; or mixture of TEFLON (poly(tetrafluoroethylene)) and SAN (poly(stryrene-acrylonitrile)) resin or any mixture of any of the foregoing. The anti-flame dripping agent may be present in an amount of 0 to 2, specifically 0.2 to 1.8 and more specifically 0.5 to 1.5 wt%, based on the total weight of the flame retardant composition.

The term "thermally conductive filler" or "thermally conductive additive", or "thermally conductive materials" refers to any additive, filler, or material which is typically inorganic, and that has a thermal conductivity higher than the polymer matrix and can help to increase the thermal conductivity of polymer materials if introduced into the polymer formulation. The thermally conductive filler may be selected from AlN, Al₄C₃, Al₂O₃, BN, AlON, MgSiN₂, SiC, Si₃N₄, graphite, expanded graphite, expandable graphite, graphene, carbon fiber, ZnS, CaO, MgO, ZnO, TiOz, H₂Mg₃(SiO₃)₄, CaCO₃, Mg(OH)₂, mica, BaO, γ-AlO(OH), α-AlO(OH), Al(OH)₃, BaSO₄, CaSiO₃, ZrO₂, SiO₂, a glass bead, a glass fiber, MgO•xAl₂O₃, CaMg(CO₃)₂, clay, or a combination thereof.

The thermal conductive filler may be of regular or irregular shape or form, including but not limited to spherical particles, whiskers, flakes, and/or platelets. In certain aspects, the thermal conductive filler is a mono-layer or multiple layer flake or platelet having an aspect ratio between 1 and 200, where aspect ratio refers to the ratio of the longest dimension to the shortest dimension of the particular filler particle, whisker, flake, and/or platelet. The filler may have a maximum dimension in a range of from about 100 nm to about 1500µm and a minimum dimension in a range of from about 10 nm to about 100 µm. The surface area is 0.5 m²/g to 500m²/g and the fillers may be coated with a bonding agent or not as desired.

The fillers and reinforcing agents may be present in an amount of 0 to 60 wt%, specifically 1 to 20 wt%, specifically 2 to 15 wt%, specifically 3 to 13 wt%, and more specifically 4 to 12 wt%, based on the total weight of the flame retardant composition.

Other additives such as anti-oxidants, thermal stabilizers, anti-ozonants, mold release agents, UV stabilizers, dyes, colorants, may also be used in the composition. An article may be formed from the composition disclosed herein. In an embodiment, the article is a molded article.

The preparation of the flame retardant composition can be achieved by blending the ingredients under conditions that produce an intimate blend. All of the ingredients can be added initially to the processing system, or else certain additives can be pre-compounded with one or more of the primary components.

In an embodiment, the composition is manufactured by blending the organic polymer, where the organic polymer is a polycarbonate, with the flame retardant package. The blending can be dry blending, melt blending, solution blending, or a combination thereof.

In an embodiment, the composition can be dry blended to form a mixture in a device such as a Henschel mixer or a Waring blender prior to being fed to an extruder, where the mixture is melt blended. In another embodiment, a portion of the organic polymer, where the organic polymer is a polycarbonate, can be premixed with the flame retardant package to form a dry preblend. The dry preblend is then melt blended with the remainder of the organic polymer in an extruder. In an embodiment, a portion of the composition can be fed initially at the mouth of the extruder while the remaining portion of the composition is fed through a port downstream of the mouth.

Blending of the composition involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or a combination thereof.

Blending involving the aforementioned forces may be conducted in machines such as single or multiple screw extruders, Buss kneader, Henschel, helicones, Ross mixer, Banbury, roll mills, molding machines such as injection molding machines, vacuum forming machines, blow molding machine, or then like, or a combination thereof.

The composition can be introduced into the melt blending device in the form of a masterbatch. For example, a portion of the composition can be pre-blended with the flame retardant package to form a masterbatch, which is then blended with the remaining ingredients to form the flame retardant composition. In such a process, the masterbatch may be introduced into the blending device downstream of the point where the remaining ingredients of the flame retardant composition are introduced.

In an embodiment, the flame-retardant compositions disclosed herein are used to prepare molded articles such as for example, durable articles, electrical and electronic components, lighting articles, automotive parts, and the like. The compositions can be converted to articles using common thermoplastic processes such as film and sheet extrusion, injection molding, gas-assisted injection molding, extrusion molding, compression molding and blow molding.

In an embodiment, the flame retardant compositions when prepared into test specimens having a thickness of at least 0.4 mm, exhibit a flammability class rating according to Underwriters Laboratories Inc. UL-94 of at least V-2, more specifically at least V-1, and yet more specifically at least V-0. In another embodiment, the flame retardant compositions when prepared into specimens having a thickness of at least 3.0 millimeters, exhibit a flammability class rating according to Underwriters Laboratories Inc. UL-94 of at least V-2, more specifically at least V-1, and yet more specifically at least V-0.

Flammability tests were performed following the procedure of Underwriter's Laboratory Bulletin 94 entitled "Tests for Flammability of Plastic Materials, UL 94." Several ratings can be applied based on the rate of burning, time to extinguish, ability to resist dripping, and whether or not drips are burning. Samples for testing are bars having dimensions of 125 mm length×13 mm width by no greater than 30 mm thickness. Materials can be classified according to this procedure as UL 94 HB (horizontal burn), V0, V1, V2, 5VA and/or 5VB on the basis of the test results obtained for five samples; however, the compositions herein were tested and classified only as V0, V1, and V2, the criteria for each of which are described below.

V0: In a sample placed so that its long axis is 180 degrees to the flame, the period of flaming and/or smoldering after removing the igniting flame does not exceed ten (10) seconds and the vertically placed sample produces no drips of burning particles that ignite absorbent cotton. Five bar flame out time is the flame out time for five bars, each lit twice, in which the sum of time to flame out for the first (t1) and second (t2) ignitions is less than or equal to a maximum flame out time (t1+t2) of 50 seconds.

V1: In a sample placed so that its long axis is 180 degrees to the flame, the period of flaming and/or smoldering after removing the igniting flame does not exceed thirty (30) seconds and the vertically placed sample produces no drips of burning particles that ignite absorbent cotton. Five bar flame out time is the flame out time for five bars, each lit twice, in which the sum of time to flame out for the first (t1) and second (t2) ignitions is less than or equal to a maximum flame out time (t1+t2) of 250 seconds.

V2: In a sample placed so that its long axis is 180 degrees to the flame, the average period of flaming and/or smoldering after removing the igniting flame does not exceed thirty (30) seconds, but the vertically placed samples produce drips of burning particles that ignite cotton. Five bar flame out time is the flame out time for five bars, each lit twice, in which the sum of time to flame out for the first (t1) and second (t2) ignitions is less than or equal to a maximum flame out time (t1+t2) of 250 seconds.

In an embodiment, the flame retardant compositions are of particular utility in the manufacture flame retardant articles that pass the UL94 vertical burn tests, in particular the UL94 5VB standard. In the UL94 vertical burn test, a flame is applied to a vertically fastened test specimen placed above a cotton wool pad. To achieve a rating of 5VB, burning must stop within 60 seconds after five applications of a flame to a test bar, and there can be no drips that ignite the pad.

If a sample can pass 5VB, then the sample can continue to be tested on 5VA to get a 5VA listing. Various embodiments of the compositions described on 5VA meet the UL94 5VB standard. The test is conducted as follows:

Support the plaque specimen (150 ±5 mm × 150 ±5 mm) by a clamp on the ring stand in the horizontal plane. The flame is then to be applied to the center of the bottom surface of the plaque at an angle of 20±5° from the vertical, so that the tip of the blue cone just touches the specimen. Apply the flame for 5 ±0.5 seconds and then remove for 5 ±0.5 seconds. Repeat the operation until the plaque specimen has been subjected to five applications of the test flame. When desired, to complete the test, hand hold the burner and fixture so that the tip of the inner blue cone maintains contact with the surface of the plaque. After the fifth application of the test flame, and after all flaming or glowing combustion has ceased, it is to be observed and recorded whether or not the flame penetrated (burned through) the plaque.

A VXTOOL test is used to estimate p(FTP), i.e., the probability for a first time pass when subjected to a flame. In the VXTOOL test, 20 flame bars are burnt as per UL94 test protocols and the flame data is analyzed to estimate the p(FTP) values. The p(FTP) value can range between 0 and 1 and indicates the probability that the first five bars when tested for V-0 or V-1 UL94 test would pass. A higher p(FTP) value indicates the greater likelihood of passing and therefore an improved flame retardancy. Thus, a VXTOOL p(FTP)V-0 of 1.0 signifies a very high confidence/probability of attaining the V-0 flame rating, whereas a p(FTP)V-0 of 0.0 indicates a very poor probability of attaining the V-0 flame rating.

Izod Impact Strength is used to compare the impact resistances of plastic materials. Notched Izod impact strength was determined at both 23°C and 0°C using a 3.2-mm thick, molded, notched Izod impact bar. It was determined per ASTM D256. The results are reported in Joules per meter. Tests were conducted at room temperature (23°C) and at a low temperature (-20°C).

Heat deflection temperature (HDT) is a relative measure of a material's ability to perform for a short time at elevated temperatures while supporting a load. The test measures the effect of temperature on stiffness: a standard test specimen is given a defined surface stress and the temperature is raised at a uniform rate. HDT was determined as flatwise under 1.82 MPa loading with 3.2 mm thickness bar according to ASTM D648. Results are reported in degrees centigrade (°C).

Melt volume rate (MVR) is measured 300°C/1.2 kg as per ASTM D 1238.

The flame retardant composition displays an advantageous combination of properties such as ductility, melt processability, impact strength, and flame retardancy.

The "through-plane thermal conductivity" is determined in accordance with ASTM E1461 using a laser flash method with a Nanoflash LFA 447 xenon flash apparatus from Netzsh Group. The test specimen is cut into a 10×10×3mm square sample from an injection molded 80x10x3mm IZOD bar. The measurements are provided in units of k (W/mK). The thermal conductivity k(T) is determined by thermal diffusivity, specific heat, and density of the specimen according to the equation as follows: k(T) = α(T)*cₚ(T)*ρ(T), in which k(T) refer to thermal conductivity; α(T) refer to thermal diffusivity; cₚ(T) refer to specific heat, and ρ(T) refer to density of the specimen. The thermal diffusivity (α(T), cm²/s) can be determined by measurement of the temperature rise at the rear face of a thin-disc specimen produced by a short energy pulse on the front face.

The specific heat (Cp, J/gK) , also called specific heat capacity, refer to the amount of energy required to raise one gram of a pure substance by one degree centigrade of the specific sample, can be tested by DSC. And the density ρ, g/cm³), is determined using a water immersion method (ASTM D792). Accordingly, when a through-plane value is given for a thermoplastic polymer blend composition, it is understood that the value is derived from a molded sample of the blended thermoplastic composition per the test method.

The "in plane thermal conductivity" is also determined in accordance with ASTM E1461 using laser flash method with a Nanoflash LFA 447 xenon flash apparatus from Netzsh Group, but is based on a Φ25×0.4 mm round sample cut from Φ100×0.4 mm sheet achieved by injection molding. The thermal conductivity k(T) is determined by thermal diffusivity, specific heat, and density of the specimen according to the equation as follows: k(T) = α(T)*cₚ(T)*ρ(T), in which k(T) refer to thermal conductivity; α(T) refer to thermal diffusivity; cₚ(T) refer to specific heat, and ρ(T) refer to density of the specimen. The thermal diffusivity (α(T), cm²/s) can be determined by measurement of the average temperature rise of four (4) testing spots at the rear face of the specimen produced by a short energy pulse on the front face (as shown in the picture below)

The specific heat (Cp, J/gK) , also called specific heat capacity, refer to the amount of energy required to raise one gram of a pure substance by one degree centigrade of the sample, can be tested by DSC. And the density (ρ, g/cm³), is determined using a water immersion method (ASTM D792). Accordingly, when an in-plane value is given for a thermoplastic polymer blend composition, it is understood that the value is derived from a molded sample of the blended thermoplastic composition per the test method.

The following examples, which are meant to be exemplary, not limiting, illustrate the flame retardant compositions and methods of manufacturing of some of the various embodiments of the flame retardant compositions described herein.

The composition and methods of manufacture thereof is exemplified by the following non-limiting examples.

### EXAMPLE

The following examples were conducted to demonstrate the disclosed flame retardant composition and the method of manufacturing the flame retardant composition. The Examples demonstrate the preparation of a flame retardant composition that comprises a linear polycarbonate homopolymer, a branched polycarbonate polymer, a polysiloxane-polycarbonate copolymer and a phosphorus containing flame retardant.

This example details the use of a polysiloxane-polycarbonate copolymer blended with a linear and a branched polycarbonate. In short, the polycarbonate composition comprises a linear polycarbonate and a branched polycarbonate in addition to a polysiloxane-polycarbonate copolymer. This example was conducted to demonstrate the synergistic contribution to the flame retardant composition from the calcium sulfate, the flame retardant (BPADP) and the polysiloxane polycarbonate copolymer.

Table 1 lists ingredients used in the following examples along with a brief description of these ingredients. Table 2 lists the compounding conditions and Table 3 lists molding conditions.

**Table 1**

| Component | Chemical description | Source |
|---|---|---|
| 100 GRADE PCP polycarbonate, | C017, Mw=20,000Da, MFI ∼ 25 g/10min, CAS: 111211-39-3 | SABIC |
| EXL Polycarbonate, | C9030P, Mw=30,000Da, MFI ∼ 7 g/10min, CAS: 111211-39-3 | SABIC |
| Branched THPE polycarbonate, | C019C, MFI ∼ 1 g/10min, CAS: 111211-39-3 | SABIC |
| Calcium sulfate, NP-S04 | Whisker, L: 5∼80um, D: 1-8um, CAS: 7778-18-9 | Jiangxi NP New Materials Technology Co., Ltd. |
| Calcium sulfate, NP-S01 | Whisker, KH550 coating; L: 10∼200um, D: 1-4um, CAS: 7778-18-9 | Jiangxi NP New Materials Technology Co., Ltd. |
| BNHN | Boron Nitride (BN) [CAS: 10043-11-5] | Dandong Chemical Engineering Institure Co., Ltd. |
| TALC | Talc/ GH7(05), CAS: 14807-96-6 | Hayashi kasei |
| THD-S | Graphite, CAS: 7782-42-5 | Qingdao Tianheda Graphite Co., Ltd. |
| SAN encapsulated PTFE - intermediate resin | ENCAPSULATED PTFE, CAS: 9003-54-7,9002-84-0 | SABIC |
| BPADP | Bisphenol A bis(diphenyl phosphate), CAS: 181028795,115866 | Nagase Co. Ltd |

The flame retardant, char-forming agents and fillers, reinforcing agents and any other additives are first be dry blended together, then collectively fed into an extruder from one or more multi-feeders, or alternatively, separately fed into extruder from one or multi-feeders without any dry-blending. The polycarbonate or any polycarbonate combination may be first dry blended separately, or alternatively, dry blended with any combination of foregoing mentioned fillers or additives, and then feed into the extruder. The fillers used in the manufacturing of the flame retardant composition may also be first processed into a master batch, and then feed into an extruder.

The feeding of polycarbonates, char-forming agents, additives, fillers and reinforcing agents, master batch or any combination of polymers, fillers blends may be fed into an extruder via a throat hopper or via side feeders.

The compounding was conducted on a Toshiba SE37mm twin-screw extruder having 11 barrels. The temperature for each of the barrels is detailed in the Table 2. All the components were fed from the main throat of the extruder. The additives (phosphazene, stabilizers and mold release agents) were pre-blended with the polycarbonate powder in a super blender and then fed into the extruder via the main throat.

**Table 2**

| Extruder Type | Unit of Measure | TEM-37BS |
|---|---|---|
| Barrel Size | mm | 1500 |
| Screw Design | NONE | L-3-3 |
| Die | mm | 430 |
| Zone 1 Temp | °C | 50 |
| Zone 2 Temp | °C | 150 |
| Zone 3 Temp | °C | 260 |
| Zone 4 Temp | °C | 260 |
| Zone 5 Temp | °C | 260 |
| Zone 6 Temp | °C | 260 |
| Zone 7 Temp | °C | 260 |
| Zone 8 Temp | °C | 260 |
| Zone 9 Temp | °C | 240 |
| Zone 10 Temp | °C | 240 |
| Zone 11 Temp | °C | 240 |
| Die Temp | °C | 240 |
| Screw speed | rpm | 300 |
| Throughput | kg/hr | 30 |
| Torque | % | 47 |
| Vacuum 1 | MPa | -0.08 |
| Side Feeder 1 speed | rpm | 250 |

Extruded pellets were dried in a dehumidifying dryer for 4 hours at 90°C. Different thicknesses of UL94 testing bars, i.e., 1.0 mm, 1.2 mm, 2.0 mm and 2.5 mm thicknesses were molded with single gate tooling, and 0.3 mm, 0.4 mm were molded with film gate tooling. Table 3 shows the molding condition.

**Table 3**

| Pre-drying time | Hour | 4 | 4 | 4 | 4 | 4 |
|---|---|---|---|---|---|---|
| Pre-drying temp | °C | 90 | 90 | 90 | 90 | 90 |
| Hopper temp | °C | 50 | 50 | 50 | 50 | 50 |
| Zone 1 temp | °C | 280 | 280 | 280 | 280 | 280 |
| Zone 2 temp | °C | 280 | 280 | 280 | 280 | 280 |
| Zone 3 temp | °C | 280 | 280 | 280 | 280 | 280 |
| Nozzle temp | °C | 280 | 280 | 280 | 280 | 280 |
| Mold temp | °C | 90 | 100 | 100 | 90 | 90 |
| Screw speed | rpm | 80 | 80 | 80 | 80 | 80 |
| Back pressure | kgf/cm² | 50 | 50 | 50 | 50 | 50 |
| Molding Machine | NONE | Nestal | Nestal | Nestal | Nestal | Nestal |
| Mold Type (insert) | NONE | UL 2 .0 and 2.5 mm | UL 1.2 mm | UL 1.0 mm | UL 0.69 mm and 0.83 mm, double gate | UL 0.3 and 0.4 mm film gate |
| Injection speed(mm/s) | mm/s | 100 | 100 | 100 | 200 | 200 |
| Holding pressure | kgf/cm² | 800 | 800 | 800 | 1000 | 1000 |
| Max. Injection pressure | kgf/cm² | 1000 | 1000 | 1000 | 1500 | 1500 |
| Transfer pressure | kgf/cm² | 0 | 0 | 0 | 0 | 0 |

Pellets extruded from extruder were then injection molded into 125x13x0.8 mm³ bars were molded for FR measurement. Bars were also manufactured for through plane TC measurement.

Examples 1-3 in the Table 4 show the comparative flame performance of the compositions using BPADP as major flame retardant and CaSO₄ NP-S04 as the flame retardant synergist. Table 4 shows the synergy derived from the use of calcium sulfate (CaSO₄ NP-S04) in polycarbonate compositions without a filler or without a reinforcing agent. As can be seen from Sample #1 and #2, increasing NP-S04 loading from 10 wt% to 15 wt%, the flame time decreased, but can only achieve V-1@1.2mm when tested as per a UL94 protocol. In Sample #3 further increasing the calcium sulfate loading to 20 wt% reduces the flame time and marginally achieves a flame retardant rating of V-0 @ 1.2mm when tested as per a UL94 protocol.

**Table 4:**

| Sample # | Units | #1 | #2 | #3 |
|---|---|---|---|---|
| BPA-PC | % | 64.5 | 59.5 | 54.5 |
| EXL PC | % | 10 | 10 | 10 |
| THPE PC | % | 10 | 10 | 10 |
| BPADP | % | 4.5 | 4.5 | 4.5 |
| T-SAN | % | 0.5 | 0.5 | 0.5 |
| Stabilizer/mold release agent | % | 0.5 | 0.5 | 0.5 |
| CaSO₄, NP-S04 | % | 10 | 15 | 20 |

| Properties | | #1 | #2 | #3 |
|---|---|---|---|---|
| Through Plane TC | W/m*K | 0.251 | 0.295 | 0.299 |
| In Plane TC | W/m*K | 0.951 | 0.975 | 0.971 |
| 1.2 mm, 23°C/48 hours | No. of Burning Drops | 0 | 0 | 0 |
| | p(FTP)V0 | 0.12 | 0.34 | 0.48 |
| | p(FTP)V1 | 0.86 | 0.99 | 0.99 |
| | FOT 5 (s) | 47.65 | 42.1 | 38 |
| 1.2 mm, 70°C/168 hours | No. of Burning Drops | 0 | 0 | 0 |
| | p(FTP)V0 | 0.16 | 0.19 | 0.56 |
| | p(FTP)V1 | 0.99 | 0.91 | 0.99 |
| | FOT 5 (s) | 48.4 | 43.35 | 36.1 |

Sample #s 4 and 5 in Table 5 show the comparative flame performance of the compositions filled with a thermal conductive filler boron nitride, BPADP as the flame retardant and CaSO₄ NP-S04 as flame retardant synergist. As can be seen increasing CaSO₄ loading can reduce the time to flame out and when the synergist loading is 15 wt% CaSO₄ as in Sample # 5 the flame retardant composition achieves V-0 @1.2mm.

**Table 5**

| Sample # | | #4 | #5 |
|---|---|---|---|
| BPA-PC | % | 54.5 | 49.5 |
| EXL PC | % | 10 | 10 |
| THPE PC | % | 10 | 10 |
| BPADP | % | 4.5 | 4.5 |
| T-SAN | % | 0.5 | 0.5 |
| Stabilizer/mold release agent | % | 0.5 | 0.5 |
| BNHN | % | 10 | 10 |
| CaSO4, NP-S04 | % | 10 | 15 |

| Properties | | | |
|---|---|---|---|
| Through Plane TC | W/m*K | 0.436 | 0.492 |
| In Plane TC | W/m*K | 1.437 | 1.344 |
| 1.2 mm, 23C/48H | No. of Burning Drops | 0 | 0 |
| | p(FTP)V0 | 0.74 | 0.90 |
| | p(FTP)V1 | 1.00 | 1.00 |
| | FOT 5 (s) | 28.6 | 27.4 |
| 1.2 mm, 70C/ 168H | No. of Burning Drops | 0 | 0 |
| | p(FTP)V0 | 0.21 | 0.66 |
| | p(FTP)V1 | 0.97 | 0.99 |
| | FOT 5 (s) | 43.11 | 29.75 |

Sample #s 6 to 8 in Table 6 are polycarbonate compositions filled with talc which is a traditional flame retardant synergist and also performs thermal conductivity. In Sample #6 there is 35 wt% talc and 5 wt% CaSO₄, which shows serious dripping and cotton ignition and cannot achieve V-2 @ 1.2 mm. By replacing 5 wt% of talc with CaSO₄, the flame performance was improved a little but still does not achieve V-1 @1.2 mm. Further increasing CaSO₄ loading to 20 wt% in Sample #8, produces a flame retardancy of V-1 @ 1.0 mm.

**Table 6**

| Sample # | | #6 | #7 | #8 |
|---|---|---|---|---|
| BPA-PC | % | 34.5 | 34.5 | 34.5 |
| EXL PC | % | 10 | 10 | 10 |
| THPE PC | % | 10 | 10 | 10 |
| BPADP | % | 4.5 | 4.5 | 4.5 |
| T-SAN | % | 0.5 | 0.5 | 0.5 |
| Stabilizer / mold release agent | % | 0.5 | 0.5 | 0.5 |
| Talc | % | 35 | 30 | 20 |
| CaSO₄, NP-S04 | % | 5 | 10 | 20 |
| Test Description | Unit | #6 | #7 | #8 |
| Through Plane TC | W/m*k | 0.502 | 0.579 | 0.512 |
| In Plane TC | W/m*k | 2.079 | 1.732 | 1.396 |
| | No. of Burning Drops | V2 Fail | 0 | 0 |
| 1.0 mm, 23°C/48 hour (H) | p(FTP)V0 | | 0.01 | 0.47 |
| | p(FTP)V1 | | 0.66 | 1 |
| | FOT 5 (s) | | 73.3 | 41.85 |
| 1.0 mm, 70°C/168H | No. of Burning Drops | V2 Fail | V2 Fail | 0 |
| | p(FTP)V0 | | | 0 |
| | p(FTP)V1 | | | 0.78 |
| | FOT 5 (s) | | | 70.55 |
| 1.2 mm, 23°C/48H | No. of Burning Drops | V2 Fail | V2 Fail | 0 |
| | p(FTP)V0 | | | 0.35 |
| | p(FTP)V1 | | | 0.93 |
| | FOT 5 (s) | | | 37.91 |
| 1.2 mm, 70C/168H | No. of Burning Drops | V2 Fail | V2 Fail | 0 |
| | p(FTP)V0 | | | 0.39 |
| | p(FTP)V1 | | | 1 |
| | FOT 5 (s) | | | 41.06 |

Examples in Table 7 show the comparative flame performance of the compositions filled with talc and some other thermal conductive fillers graphite, and using BPADP as major flame retardant and CaSO₄ NP-S04 as the flame retardant synergist. In Control #4, no CaSO₄ is added and the total filler loading is 40 wt%. This composite cannot achieve V-0 @ 1.2 mm. But when 10 wt% talc is replaced with 10 wt% CaSO₄ in #11, it can achieve V-0 @ 1.0 mm successfully.

**Table 7**

| Sample # | | Control #4 | #9 |
|---|---|---|---|
| BPA-PC | % | 34.5 | 34.5 |
| EXL PC | % | 10 | 10 |
| THPE PC | % | 10 | 10 |
| BPADP | % | 4.5 | 4.5 |
| T-SAN | % | 0.5 | 0.5 |
| Stabilizer / mold release agent | % | 0.5 | 0.5 |
| Talc, | % | 30 | 20 |
| Graphite, THD-s | % | 10 | 10 |
| CaSO₄, NP-S04 | % | | 10 |
| | | | |

| Test Description | Unit | Control #4 | #9 |
|---|---|---|---|
| Through plane TC | W/m*k | 0.625 | 0.566 |
| In plane TC | W/m*k | 2.097 | 1.826 |
| 1.0 mm, 23°C/48 hour(H) | No. of Burning Drops | 0 | 0 |
| | p(FTP)V0 | 0.22 | 1 |
| | p(FTP)V1 | 0.95 | 1 |
| | FOT 5 (s) | 43.4 | 25.15 |
| | | | |
| 1.0 mm, 70°C,/168H | No. of Burning Drops | dripping | 0 |
| | p(FTP)V0 | | 0.79 |
| | p(FTP)V1 | | 1 |
| | FOT 5 (s) | | 37.65 |
| | | | |
| 1.2 mm, 23°C/48H | No. of Burning Drops | 0 | 0 |
| | p(FTP)V0 | 0.13 | 0.97 |
| | p(FTP)V1 | 0.98 | 1 |
| | FOT 5 (s) | 47.2 | 23.8 |
| | | | |
| 1.2 mm, 70°C/168H | No. of Burning Drops | 0 | 0 |
| | p(FTP)V0 | 0.48 | 1 |
| | p(FTP)V1 | 0.99 | 1 |
| | FOT 5 (s) | 36.5 | 17.6 |

The compositions in Tables 4-7 all show that using calcium sulfate as synergist with 4.5 wt% BPADP as major FR component produces superior results. The results showed that CaSO₄ can help improve flame retardant performance in a polycarbonate matrix, or in a polycarbonate matrix filled with boron nitride, talc, or with a combination of talc and graphite.

Another CaSO₄, NP-S01 which is of larger particle size than S04 and coated with amino silane KH550 was also tested. The flame retardant performance is listed in Table 8. When increasing CaSO₄ loading from 10 wt% to 20 wt%, the flame retardant performance is improved and marginal V-0 @ 1.2 mm can be achieved.

**Table 8**

| | | Control #3 | #10 | #11 |
|---|---|---|---|---|
| BPA-PC | % | | 34.45 | 34.45 |
| EXL PC | % | | 10 | 10 |
| THPE PC | % | | 10 | 10 |
| PHOSPHOROUS ACID 45 % | % | | 0.05 | 0.05 |
| BPADP | % | | 4.5 | 4.5 |
| T-SAN | % | | 0.5 | 0.5 |
| Stabilizer/ molder release agent | % | | 0.5 | 0.5 |
| Talc GH7(05) | % | | 30 | 20 |
| CaSO₄, NP- S01 | % | | 10 | 20 |
| | | | | |

| Test Description | Unit | Control #3 | #10 | #11 |
|---|---|---|---|---|
| Through Plane TC | W/m*K | | 0.49 | 0.46 |
| In Plane TC | W/m*K | | 1.787 | 1.514 |
| 1.0 mm , 23°C/48 hour(H) | No. of Burning Drops | | 1 | |
| | p(FTP)V0 | | 0.01 | dripping |
| | p(FTP)V1 | | 0.50 | |
| | FOT 5 (s) | | 72.15 | |
| | | | | |
| 1.0 mm ,70°C/ 168H | No. of Burning Drops | | | 0 |
| | p(FTP)V0 | | dripping | 0.64 |
| | p(FTP)V1 | | | 1.00 |
| | FOT 5 (s) | | | 37 |
| | | | | |
| 1.2 mm , 23°C/48H | No. of Burning Drops | | | 0 |
| | p(FTP)V0 | | dripping | 0.73 |
| | p(FTP)V1 | | | 1.00 |
| | FOT 5 (s) | | | 39.65 |
| | | | | |
| 1.2 mm,70°C/168H | No. of Burning Drops | | | 0 |
| | p(FTP)V0 | | dripping | 0.55 |
| | p(FTP)V1 | | | 0.99 |
| | FOT 5 (s) | | | 34.25 |

In summary, it may be seen that calcium sulfate shows evident flame retardant synergistic effects in the composition, and shows a significant advantage when compared with traditional flame retardant synergistic fillers, such as talc.

From the examples above, it can be seen that the through plane thermal conductivity (TC) of the composition is at least 0.3 W/mK while the flame retardancy ranges from V-2 to V-0 at a thickness of 0.4 to 3.00 mm when tested as per a UL94 test standard.

In summary, the flame retardant composition comprises 20 to 80 wt% of an organic polymer; 0.1 to 30 wt% of flame retardant that comprises a phosphorus containing flame retardant and/or a nitrogen containing flame retardant; and 0.1 to 50 wt% of calcium sulfate, where the organic polymer is a polycarbonate and may comprise a blend of linear and branched polycarbonates. The polycarbonate may also further comprise a polysiloxane polycarbonate copolymer.

The phosphorous flame retardant comprises a phosphine, a phosphinite, a phosphonite, a phosphite, a phosphine oxide, a phosphinate, a phosphonate, a phosphate, a phenoxyphosphazene, a melamine polyphosphate, or a combination thereof. In an embodiment, the phosphate is a resorcinol diphosphate or a bisphenol A diphosphate.

The calcium sulfate is a powder, whisker, fiber, or of other shape; the particle size is 0.01 to 1000 micrometers; and where the surface is optionally coated. The flame retardant composition may further comprise a char forming agent; wherein the char-forming agent comprises an organopolysiloxane, polydimethylsiloxane, silicones having phenyl, hydroxyl, amino, or epoxy functional groups, silane with phenyl, hydroxyl, amino, or epoxy functional groups. The flame retardant composition may also comprise polymeric char-forming agents; where the polymeric char forming agents are polyphenylene sulfide, polyphenylene ether, polyphenylene oxide, polyetherimide, polyetheretherketone, poly ether sulfone, or a combination thereof. Articles can be manufactured from the flame retardant composition.

The flame retardant composition may be manufactured by a method comprising blending 20 to 80 wt% of the organic polymer; 0.1 to 30 wt% of flame retardant package that comprises a phosphorus flame retardant and/or a nitrogen flame retardant; 0.1 to 50 wt% of calcium sulfate; and molding the composition, where the organic polymer is a polycarbonate.

The flame retardant composition is characterized by a through plane thermal conductivity (TC) of at least 0.3 W/mK; and a flame retardancy of V-2 to V-0 at a thickness of 0.4 to 3.00 mm when tested as per a UL94 test standard.

It is to be noted that all ranges detailed herein include the endpoints. Numerical values from different ranges are combinable.

The transition term comprising encompasses the transition terms "consisting of" and "consisting essentially of."

The term "and/or" includes both "and" as well as "or." For example, "A and/or B" is interpreted to be A, B, or A and B.

## Claims

1. A composition comprising:
20 to 80 wt% of an organic polymer, where the organic polymer is a polycarbonate;
0.1 to 30 wt% of flame retardant that comprises a phosphorus containing flame retardant and/or a nitrogen containing flame retardant; and
0.1 to 50 wt% of calcium sulfate.

2. The composition of Claim 1, where the polycarbonate comprises a blend of linear and branched polycarbonate.

3. The composition of any one of Claims 1 through 2, where the polycarbonate further comprises a polysiloxane polycarbonate copolymer.

4. The composition of any one of Claims 1 through 3, where the composition further comprises talc, boron nitride, or a combination of talc and graphite, and where the composition is **characterized by**:
i. a through plane thermal conductivity (TC) of at least 0.3 W/mK, as determined in accordance with ASTM E1461 using a laser flash method with a Nanoflash LFA 447 xenon flash apparatus; and
ii. a flame retardancy of V-2 to V-0 at a thickness of 0.4 to 3.00 mm when tested as per a UL94 test standard.

5. The composition of any one of Claims 1 through 4, wherein the phosphorous flame retardant comprises a phosphine, a phosphinite, a phosphonite, a phosphite, a phosphine oxide, a phosphinate, a phosphonate, a phosphate, a phenoxyphosphazene, a melamine polyphosphate, or a combination thereof.

6. The composition of Claim 5, where the phosphate is a resorcinol diphosphate or a bisphenol A diphosphate.

7. The composition of any one of Claims 1 through 4, wherein the calcium sulfate is a powder, whisker, fiber, or of other shape.

8. The composition of any one of Claims 1 through 4, further comprising a char forming agent; wherein the char-forming agent comprises an organopolysiloxane, polydimethylsiloxane, silicones having phenyl, hydroxyl, amino, or epoxy functional groups, silane with phenyl, hydroxyl, amino or epoxy functional groups.

9. The composition of any one of Claims 1 through 4, 5, 7 or 8, further comprising a char forming agent; wherein the char-forming agent comprises polymeric char-forming agents; where the polymeric char forming agents are polyphenylene sulfide, polyphenylene ether, polyphenylene oxide, polyetherimide, polyetheretherketone, poly ether sulfone, or a combination thereof.

10. The composition of any one of Claims 1 through 3, further comprising fillers; where the fillers are AlN, Al₄C₃, Al₂O₃, BN, AlON, MgSiN₂, SiC, Si₃N₄, graphite, expanded graphite, expandable graphite graphene, carbon fiber, ZnS, CaO, MgO, ZnO, TiO₂, H₂Mg₃(SiO₃)₄, CaCO₃, Mg(OH)₂, mica, BaO, γ-AlO(OH), α-AlO(OP), Al(OH)₃, BaSO₄, CaSiO₃, ZrO₂, SiO₂, a glass bead, a glass fiber, MgO•xAl₂O₃, CaMg(CO₃)₂, clay, or a combination thereof.

11. An article formed from the composition of any one of Claims 1 through 10.

12. The article of Claim 11, wherein the article is a molded article.

13. A method comprising:
blending 20 to 80 wt% of an organic polymer; 0.1 to 30 wt% of flame retardant package that comprises a phosphorus flame retardant and/or a nitrogen flame retardant; 0.1 to 50 wt% of calcium sulfate; and
molding the composition,
where the organic polymer is a polycarbonate.

14. The method of Claim 13, further comprising blending up to 5 wt% char-forming agents; up to 2 wt% of anti-flame dripping agents; and up to 60 wt% of a filler,
wherein the char-forming agents comprise an organopolysiloxane, polydimethylsiloxane, silicones having phenyl, hydroxyl, amino, or epoxy functional groups, or silane with phenyl, hydroxyl, amino or epoxy functional groups, and
wherein the anti-flame dripping agents comprise a polymeric chain extender, a multi-functional amino or carboxyl chain extender, a mixture of poly(tetrafluoroethylene) and poly(stryrene-acrylonitrile) resin, or a combination thereof.

## Patentansprüche

1. Zusammensetzung, umfassend:
zu 20 bis 80 Gew.-% ein organisches Polymer, wobei das organische Polymer ein Polycarbonat ist;
zu 0,1 bis 30 Gew.-% Flammschutzmittel, das ein phosphorhaltiges Flammschutzmittel und/oder ein stickstoffhaltiges Flammschutzmittel umfasst; und
zu 0,1 bis 50 Gew.-% Calciumsulfat.

2. Zusammensetzung nach Anspruch 1, wobei das Polycarbonat eine Mischung aus linearem und verzweigtem Polycarbonat umfasst.

3. Zusammensetzung nach einem der Ansprüche 1 bis 2, wobei das Polycarbonat ferner ein Polysiloxan-Polycarbonat-Copolymer umfasst.

4. Zusammensetzung nach einem der Ansprüche 1 bis 3, wobei die Zusammensetzung ferner Talk, Bornitrid oder eine Kombination aus Talk und Graphit umfasst und wobei die Zusammensetzung **gekennzeichnet ist durch:**
i. eine Wärmeleitfähigkeit (TC) **durch** die Ebene von mindestens 0,3 W/mK, wie gemäß ASTM E1461 unter Verwendung eines Laserflash-Verfahrens mit einer Nanoflash-LFA-447-Xenon-Flash-Einrichtung bestimmt; und
ii. einen Flammschutz von V-2 bis V-0 bei einer Dicke von 0,4 bis 3,00 mm, wenn gemäß einem UL94-Teststandard getestet.

5. Zusammensetzung nach einem der Ansprüche 1 bis 4, wobei das phosphorhaltige Flammschutzmittel ein Phosphin, ein Phosphinit, ein Phosphonit, ein Phosphit, ein Phosphinoxid, ein Phosphinat, ein Phosphonat, ein Phosphat, ein Phenoxyphosphazen, ein Melaminpolyphosphat oder eine Kombination davon umfasst.

6. Zusammensetzung nach Anspruch 5, wobei das Phosphat ein Resorcinoldiphosphat oder ein Bisphenol-A-diphosphat ist.

7. Zusammensetzung nach einem der Ansprüche 1 bis 4, wobei das Calciumsulfat ein Pulver, ein Whisker, eine Faser oder von einer anderen Form ist.

8. Zusammensetzung nach einem der Ansprüche 1 bis 4, ferner umfassend ein kohlebildendes Mittel; wobei das kohlebildende Mittel ein Organopolysiloxan, Polydimethylsiloxan, Silikone, die Phenyl-, Hydroxyl-, Amino- oder Epoxidfunktionsgruppen aufweist, Silan mit Phenyl-, Hydroxyl-, Amino- oder Epoxidfunktionsgruppen umfasst.

9. Zusammensetzung nach einem der Ansprüche 1 bis 4, 5, 7 oder 8, ferner umfassend ein kohlebildendes Mittel; wobei das kohlebildende Mittel polymere kohlebildende Mittel umfasst; wobei die polymeren kohlebildenden Mittel Polyphenylensulfid, Polyphenylenether, Polyphenylenoxid, Polyetherimid, Polyetheretherketon, Polyethersulfon oder eine Kombination davon sind.

10. Zusammensetzung nach einem der Ansprüche 1 bis 3, ferner umfassend Füllstoffe; wobei die Füllstoffe AlN, Al₄C₃, Al₂O₃, BN, AION, MgSiN₂, SiC, Si₃N₄, Graphit, expandierter Graphit, expandierbares Graphitgraphen, Kohlenstofffaser, ZnS, CaO, MgO, ZnO, TiO₂, H₂Mg₃(SiO₃)₄, CaCO₃, Mg(OH)₂, Glimmer, BaO, γ-AlO(OH), α-AlO(OH), Al(OH)₃, BaSO₄, CaSiOs, Zr₂, SiO₂, ein Glaskügelchen, eine Glasfaser, MgO•xAl₂O₃, CaMg(CO₃)₂, Ton oder eine Kombination davon sind.

11. Artikel, der aus der Zusammensetzung nach einem der Ansprüche 1 bis 10 gebildet wird.

12. Artikel nach Anspruch 11, wobei der Artikel ein geformter Artikel ist.

13. Verfahren, umfassend:
Mischen von zu 20 bis 80 Gew.-% ein organisches Polymer; zu 0,1 bis 30 Gew.-% Flammschutzmittelpaket, das ein Phosphorflammschutzmittel und/oder ein Stickstoffflammschutzmittel umfasst, zu 0,1 bis 50 Gew.-% Calciumsulfat; und
Formen der Zusammensetzung,
wobei das organische Polymer ein Polycarbonat ist.

14. Verfahren nach Anspruch 13, ferner umfassend das Mischen von bis zu 5 Gew.-% kohlebildenden Mitteln; bis zu 2 Gew.-% Anti-Flammentropfmitteln; und bis zu 60 Gew.-% einen Füllstoff,
wobei die kohlebildenden Mittel ein Organopolysiloxan, Polydimethylsiloxan, Silikone, die Phenyl-, Hydroxyl-, Amino- oder Epoxidfunktionsgruppen aufweisen, oder Silan mit Phenyl-, Hydroxyl-, Amino- oder Epoxidfunktionsgruppen umfassen, und
wobei die Anti-Flammentropfmittel einen Polymerkettenverlängerer, einen multifunktionellen Amin- oder Carboxylkettenverlängerer, ein Gemisch aus Poly(tetrafluorethylen) und Poly(stryrenacrylnitril)harz oder eine Kombination davon umfassen.

## Revendications

1. Composition comprenant :
20 à 80 % en poids d'un polymère organique, où le polymère organique est un polycarbonate ;
0,1 à 30 % en poids d'agent ignifuge qui comprend un agent ignifuge contenant du phosphore et/ou un agent ignifuge contenant de l'azote ; et
0,1 à 50 % en poids de sulfate de calcium.

2. Composition selon la revendication 1, où le polycarbonate comprend un mélange de polycarbonate linéaire et ramifié.

3. Composition selon l'une quelconque des revendications 1 à 2, où le polycarbonate comprend en outre un copolymère de polysiloxane polycarbonate.

4. Composition selon l'une quelconque des revendications 1 à 3, où la composition comprend en outre du talc, du nitrure de bore, ou une combinaison de talc et de graphite, et où la composition est **caractérisée par** :
i. une conductivité thermique plane traversante (TC) d'au moins 0,3 W/mK, telle que déterminée conformément à la norme ASTM E1461 à l'aide d'un procédé flash laser avec un appareil de flash au xénon à Nanopuces LFA 447 ; et
ii. une ignifugation de V-2 à V-0 à une épaisseur de 0,4 à 3,00 mm lorsqu'il est testé conformément à une norme de test UL94.

5. Composition selon l'une quelconque des revendications 1 à 4, dans laquelle l'agent ignifuge phosphoré comprend une phosphine, une phosphinite, un phosphonite, un phosphite, un oxyde de phosphine, un phosphinate, un phosphonate, un phosphate, un phénoxyphosphazène, un polyphosphate de mélamine, ou une combinaison de ceux-ci.

6. Composition selon la revendication 5, où le phosphate est un diphosphate de résorcinol ou un diphosphate de bisphénol A.

7. Composition selon l'une quelconque des revendications 1 à 4, dans laquelle le sulfate de calcium est une poudre, un whisker, une fibre ou une autre forme.

8. Composition selon l'une quelconque des revendications 1 à 4, comprenant en outre un agent de formation de charbon ; dans laquelle l'agent de formation de charbon comprend un organopolysiloxane, un polydiméthylsiloxane, des siliciums ayant des groupes fonctionnels phényle, hydroxyle, amino, ou époxy, un silane avec des groupes fonctionnels phényle, hydroxyle, amino ou époxy.

9. Composition selon l'une quelconque des revendications 1 à 4, 5, 7 ou 8, comprenant en outre un agent de formation de charbon ; dans laquelle l'agent de formation de charbon comprend des agents de formation de charbon polymère ; où les agents de formation de charbon polymère sont du sulfure de polyphénylène, de l'éther de polyphénylène, de l'oxyde de polyphénylène, du polyétherimide, du polyétheréthercétone, du polyéther sulfone, ou une combinaison de ceux-ci.

10. Composition selon l'une quelconque des revendications 1 à 3, comprenant en outre des charges ; où les charges sont AlN, Al₄C₃, Al₂O₃, BN, AION, MgSiN₂, SiC, Si₃N₄, graphite, graphite expansé, graphène expansible de graphite, fibre de carbone, ZnS, CaO, MgO, ZnO, TiO₂, H₂Mg₃(SiO₃)₄, CaCO,₃, Mg(OH)₂, mica, BaO, γ-AIO(OH), α-AlO(OH), Al(OH)₃, BaSO₄,
CaSiOs, ZrO₂, SiO₂, une bille de verre, une fibre de verre, MgO•xAl₂O₃, CaMg(CO₃)₂, argile, ou une combinaison de ceux-ci

11. Article formé à partir de la composition selon l'une quelconque des revendications 1 à 10.

12. Article selon la revendication 11, dans lequel l'article est un article moulé.

13. Procédé comprenant :
le mélange de 20 à 80 % en poids d'un polymère organique ; 0,1 à 30 % en poids d'un emballage ignifuge qui comprend un agent ignifuge de phosphore et/ou un agent ignifuge d'azote ; 0,1 à 50 % en poids de sulfate de calcium ; et
le moulage de la composition,
où le polymère organique est un polycarbonate.

14. Procédé selon la revendication 13, comprenant en outre le mélange jusqu'à 5 % en poids d'agents de formation de charbon ; jusqu'à 2 % en poids d'agents d'égouttement ignifuge ; et jusqu'à 60 % en poids d'une charge,
dans lequel les agents de formation de charbon comprennent un organopolysiloxane, un polydiméthylsiloxane, des siliciums ayant des groupes fonctionnels phényle, hydroxyle, amino, ou époxy, ou silane avec des groupes fonctionnels phényle, hydroxyle, amino ou époxy, et
dans lequel les agents d'égouttement ignifuge comprennent un agent d'allongement de chaîne polymère, un agent d'allongement à chaîne amino ou carboxyle multi- fonctionnel, un mélange de poly (tétrafluoroéthylène) et de résine poly (stryrène-acrylonitrile), ou une combinaison de ceux-ci.
